# EUROPEAN PATENT SPECIFICATION

(11) **EP 1 849 164 B1**
(45) Date of publication and mention of the grant of the patent: **09.07.2008**
(21) Application number: 06708310.5
(22) Date of filing: 16.02.2006
(51) Int. Cl.: G21C 19/34, G21C 19/44

(54) **HEAD-END PROCESS FOR THE REPROCESSING OF REACTOR CORE MATERIAL**
HEADEND-PROZESS ZUR NEUVERARBEITUNG VON REAKTORKERNMATERIAL
TRAITEMENT INITIAL POUR LE RETRAITEMENT DE MATERIAUX DU COEUR D UN REACTEUR

(30) Priority: 16.02.2005 US 653400 P; 25.03.2005 LU 91158
(43) Date of publication of application: 31.10.2007
(73) Proprietor: The European Atomic Energy Community (EURATOM), represented by the European Commission, 1049 Brussels (BE); Forschungszentrum Karlsruhe GmbH, 76133 Karlsruhe (DE)
(72) Inventor: FÜTTERER, Michael, A., NL-1862 AV Bergen (NL); BLUHM, Hansjoachim, 76297 Stutensee (DE); HOPPE , Peter, 76297 Stutensee (DE); SINGER, Josef, 76344 Eggenstein-Leopoldshafen (DE)
(74) Representative: Schmitt, Armand
(86) International application number: PCT/EP2006/060017
(87) International publication number: WO 2006/087360

(56) References cited:
- CA-A1- 2 104 414
- US-A- 3 322 500
- US-A- 4 323 198
- MASSON MICHEL, GRANDJEAN STEPHANE: "HTGR spent fuels processing: The CEA investigation program" 2ND INTERNATIONAL TOPICAL MEETING ON HIGH TEMPERATURE REACTOR TECHNOLOGY, 22 September 2004 (2004-09-22), pages 1-9, XP002378606 Beijing, CHINA
- BLUHM H ET AL: "Application of pulsed HV discharges to material fragmentation and recycling" IEEE TRANSACTIONS ON DIELECTRICS AND ELECTRICAL INSULATION IEEE USA, vol. 7, no. 5, October 2000 (2000-10), pages 625-636, XP002378607 ISSN: 1070-9878 cited in the application
- DATABASE WPI Section Ch, Week 200512 Derwent Publications Ltd., London, GB; Class K07, AN 2005-109782 XP002381172 & RU 2 244 354 C1 (POWER ENG RES DES INST) 10 January 2005 (2005-01-10)

## Description

The present invention relates to a head-end process for the reprocessing of reactor core material, more particularly to the fragmenting of coated fuel particles and nuclear fuel elements comprising coated fuel particles embedded in a matrix material.

### Background of the Invention

The reprocessing of coated particle fuel e.g. from high temperature gas-cooled reactors (HTGR) is useful in many cases to maximize the use of the fuel. It is even mandatory for the U-Pu (fast reactor) and for the Th-U fuel cycle as well as for the incineration of minor actinides in these reactors.

Coated fuel particles are characterized by their high resistance against mechanical impact and chemical attack, which makes them safe, rather proliferation-resistant and suitable for direct disposal, yet difficult to reprocess.

For use in a reactor, the fuel particles are generally embedded in the matrix material (e.g. graphite, carbide or ceramic) of a fuel element. About 10 000 fuel particles are e.g. contained in a spherical fuel element (pebble) of type AVR GLE-4, fabricated by NUKEM for the German High Temperature Reactor (HTR). The following table summarises the nominal characteristics of AVR GLE-4 pebbles and the embedded particles.

| **Coated Fuel Particle** | |
|---|---|
| Particle batch | HT 354-383 |
| Kernel composition | UO₂ |
| Kernel diameter [µm] | 501 |
| Enrichment [U-235 wt.%] | 16.75 |

| Thickness of coatings [µm]: | |
|---|---|
| buffer | 92 |
| inner PyC | 38 |
| SiC | 33 |
| outer PyC | 41 |
| Particle diameter [µm] | 909 |

| **Pebble** | |
|---|---|
| Heavy metal loading [g/pebble] | 6.0 |
| U-235 contents [g/pebble] | 1.00 ± 1 % |
| Number of coated particles per pebble | 9560 |
| Volume packing fraction [%] | 6.2 |
| Defective SiC layers [U/Uₜₒₜ] | 7.8×10⁻⁶ |
| Matrix graphite grade | A3-3 |
| Matrix density [kg/m³] | 1750 |
| Temperature at final heat treatment [°C] | 1900 |

For the reprocessing of coated fuel particles, i.e. the fuel kernel with multiple ceramic coatings, or fuel elements containing such fuel particles, one option is to isolate these particles from the matrix material (e.g. graphite) of the fuel elements, which may have the shape of spheres, rods, plates or other. Then the coatings of the fuel particles must be cracked to make the fuel kernel accessible to chemical reprocessing. Another option is to fragment the fuel elements and the coated particles together. A direct dissolution of the fuel element or of the coated particles is currently considered extremely difficult as in particular the often used SiC coating is resistant against dissolution in common nitric acid solutions. A mechanical cracking of the coatings is equally problematic due to the high mechanical resistance of the coatings and their questionable suitability for use in a hot cell environment.

In "An Overview of HTGR Fuel Cycle", Report ORNL-TM-4747, 1976, K. J. Notz describes examples of mechanical fracturing applied to ceramic nuclear fuel, such as grinding by hammers (coal mill type) or grinding between disks (wheat mill type). US patent 4,323,198 discloses the fragmentation by sandblasting against a hard surface for the reprocessing of nuclear particle fuel.

The known mechanical methods however suffer from several shortcomings:
low efficiency and high energy consumption;
potential use of pressurized gases as in the case of sandblasting;
production of toxic or explosive dust causing safety problems;
high noise level and vibrations;
pollution of the matter to be fragmented by non-negligible quantities of abrasion products;
high wear and tear of the impact material by abrasion, limited lifetime, high investment and operation costs.

It can thus be concluded that mechanical methods are rather unsuited for use in hot cell environment as they are e.g. not compatible with the safety standards of the latter. High overall costs inhibits the industrial applicability of the mechanical methods.

In "The Reprocessing Issue for HTR Spent Fuels", Proc ICAPP'04, Grenèche et al. discuss the pulsed high voltage discharge technique for separating coated particles from their graphite matrix. Experimental results show that graphite can be fragmented, and that the grain size distribution is a function of the number of applied pulses. The high voltage technique is known e.g. from Bluhm et al. "Application of HV Discharges to Material Fragmentation and Recycling", IEEE Transactions on Dielectrics and Electrical Insulation, Vol. 7 No. 5, 2000.

The cracking of coated fuel particles for reprocessing is, however, considered a so far unresolved problem.

Furthermore, when nuclear reactors of certain types (e.g. block-type reactors) are loaded, the fuel elements comprising the fuel particles are inserted into a support material of the reactor core. The support material depends on the reactor type and may e.g. comprise graphite, carbide or nitride. After operation, the extraction of the fuel elements and the radioactive material is difficult, because during operation of the nuclear reactor, the support material and the fuel elements may be subject to deformations. The fuel elements can be literally stuck in the surrounding support material.

Traditional methods for recovering the used nuclear fuel suffer from the disadvantage that the separation of the materials is not complete and that the support material remains contaminated with the nuclear fuel. Recycling of the support material thus is difficult.

### Summary of the Invention

It is an object of the present invention to provide a head-end process for the reprocessing of reactor core material, which is suitable for a hot cell environment and industrially relevant material streams.

In a head-end process for the reprocessing of reactor core material comprising fuel particles, reactor core material is arranged in a reactor containing a fluid (e.g. water). The reactor comprises a voltage discharge installation in the fluid. Voltage discharges are applied through the fluid for fragmenting the fuel particles into fragmentation products and the fragmentation products are segregated.

According to the invention, the fuel particles are fractured by applying voltage discharges through the fluid contained in a reactor. The process is energy-efficient and power consumption is relatively low. The process does not suffer from the shortcomings of the mechanical methods discussed above, which makes it suitable for a hot cell environment with industrially relevant quantities. After fragmentation of the fuel particles, the fragmentation products can be directly fed into classical aqueous reprocessing. At the moment of introducing the fuel particles into the reactor, the fuel particles can be comprised in said reactor core material.

The head-end process proposed is particularly well suited for fuel particles, which comprise each a fuel kernel and several coatings enclosing the fuel kernel. By application of voltage discharges, the coatings of the fuel particles are fragmented.

In a preferred embodiment of the invention, the reactor core material further comprises matrix material, which are embedded in the matrix material; both the matrix material and the coatings may be fragmented by the application of voltage discharges. If necessary, the reactor core material is cut or pre-fragmented so that the pieces fed into the reactor have a suitable size, typically of the order of a few centimetres. The fragmentation of the matrix material and the coatings may be achieved in separate process steps. Alternatively, the fragmentation of the matrix material and the coating may be achieved in a single step. The matrix material may comprise the support material of the reactor core and the fuel element material, in which the fuel particles are embedded.

As will be appreciated, the reactor core material with the fuel elements carrying the fuel particles can be fed into the present head-end process. Hence, there is no need for removing the nuclear fuel elements from the support material prior to fragmentation. The separation of the fuel kernel material and the matrix material of the support material and the fuel element can be achieved after the fragmentation by voltage discharges. The amount of fuel kernel material remaining in the matrix material is lower, which facilitates the recycling of the latter and thus potentially saves resources.

The matrix material (e.g. graphite, nitride, carbide or other ceramic material) can also be further fragmented to facilitate decontamination and to obtain a powder as the starting product for possible re-fabrication of fuel, moderator or reflector. The matrix material, contaminated after its use, would consume excessive storage space if disposed of directly. Also, graphite of sufficient quality is a scarce resource, in particular when considering the possible deployment of a relatively large number of HTGRs worldwide.

The segregation of the fragmentation products, e.g. coating shells, matrix material and/or fuel kernels can be achieved in any suited process step, like dissolving the fuel kernels or sieving. Sieving can e.g. comprise several sieving steps with sieves of different hole sizes. If the fuel kernel is to be dissolved e.g. in nitric acid, the coatings need not to be completely removed from the fuel kernels: it is sufficient that a crack in the coatings allows the acid to penetrate to the fuel kernel.

According to a preferred embodiment of the invention, it is proposed a head-end process for the reprocessing of reactor core material wherein the reactor core material is arranged in a reactor containing a first volume of a fluid, the reactor being provided with a voltage discharge installation in the fluid. First voltage discharges are applied through the first volume of fluid so as to primarily fragment the matrix material. The so-obtained fragmentation products are segregated so as to retrieve residual fragments containing the nuclear fuel kernels and possibly some residual matrix material. The residual fragments are arranged in the same or another reactor containing a second volume of fluid and second voltage discharges are applied through the second volume of fluid so as to fragment the coatings and the residual matrix material contained in the residual fragments. After fragmentation, the fuel kernels are segregated from the coatings and/or the residual matrix material.

The electric parameters for applying the first and the second voltage discharges can be adapted so that in the first fragmentation step mainly matrix material is fragmented, while in the second fragmentation step the coatings of the fuel particles are cracked. The electric power can be chosen significantly higher in the second fragmentation step in order to achieve an increased power density in the liquid. Alternatively or additionally, the second volume can be chosen substantially smaller than the first volume, which also leads to an increased power density. Preferably the applied voltage ranges from 40 to 400 kV.

At least one of the segregation steps preferentially comprises sieving and/or dissolving the fuel kernels. The first segregation step may comprise sieving with a sieve having holes, the size of which may e.g. be comprised between 0.7 and 0.95 times the fuel particle diameter. Alternatively, the hole size may e.g. be comprised between 0.7 and 0.95 times the fuel kernel diameter. If a sieve is used in the second segregation step, the holes have preferably a width comprised between 0.7 and 0.95 times the fuel kernel diameter.

In practice, the reactor core material is advantageously arranged on a sieve or in a closed cup in the reactor, and the voltage discharges are caused by applying potential differences between two electrodes arranged in said reactor. One of the electrodes may be the sieve, resp. the closed cup. One of the electrodes may be grounded. If a sieve is used in the first fragmentation step, one may use a sieve with a hole size comprised between 2 and 4 times the size of the fuel particles and more preferably a sieve with a hole size corresponding to approximately 3 times the diameter of the fuel particles.

It may furthermore prove useful if the electrode plunges into the reactor core material, fuel element pieces, fuel particles, or residual fragments.

### Brief description of the drawings

- Fig. 1: is a schematic of a coated fuel particle;
- Fig. 2: is an illustration of a fragment of reactor core material with coated fuel particles embedded in matrix material;
- Fig. 3: is an illustration of the fragmenting of fuel elements with high voltage discharges;
- Fig. 4: is an illustration of fractured coating shells of fuel particles;
- Fig. 5: is an illustration of fuel kernels separated from their coatings.

### Detailed description of preferred embodiment of the invention

The invention will be more apparent from the following description of not limiting embodiments with reference to the above-mentioned drawings.

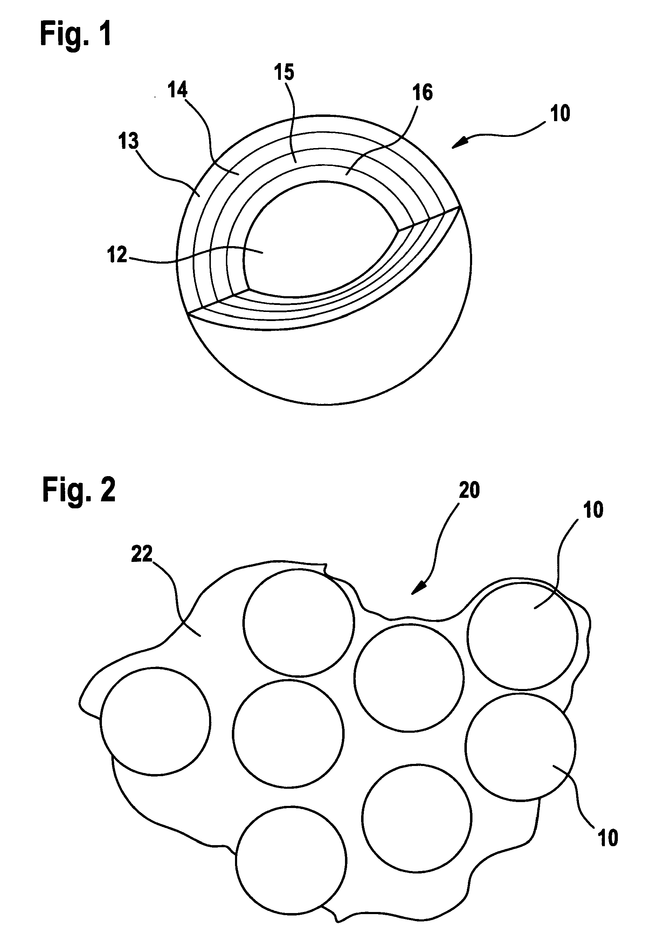

Fig. 1 shows the structure of a fuel particle 10. Without prejudice to the general concepts of the invention, we will assume in the following that the nuclear fuel (Uranium, Plutonium, Thorium, minor actinides or mixtures of them) is present as ceramic kernel 12 in spherical shape with a diameter of approximately 0.5 mm. This fuel kernel 12 is covered with several successive coating layers: an inner carbon buffer layer 13, a pyrolytic carbon layer 14, a silicon-carbide layer 15 and an outer pyrolytic carbon layer 16. The fuel kernel forms, together with the coatings the fuel particle 10 with a typical diameter of approximately 1 mm. Thousands of these particles are contained in the matrix (made e.g. from graphite, carbide, or other ceramics) of a fuel element, which may have any suitable form, such as e.g. spherical, cylindrical or other.

The process enables the separation of the fuel particles from their matrix material with the consecutive fragmentation or complete removal of the coatings to make the fuel kernel accessible to chemical dissolution for further reprocessing. The process can be used for fully separating the coatings and the matrix material from the kernels. This separation of kernels and coatings, however, is not even mandatory if the nuclear fuel of the kernels is chemically dissolved, so that a large fracture in the coating is deemed sufficient for this purpose.

Fig. 2 shows an illustration of a small fragment 20 of a nuclear fuel element. Fuel particles 10 are embedded in a matrix material 22.

If necessary, the fuel elements are mechanically cut or fragmented into pieces such that the dimensions of these primary fragments are such that the latter can be easily manipulated and fed into the subsequent process steps. Dimensions of the order of several centimetres may be convenient for the purpose of the invention. The embedded fuel particles themselves remain undamaged thanks to their high mechanical resistance.

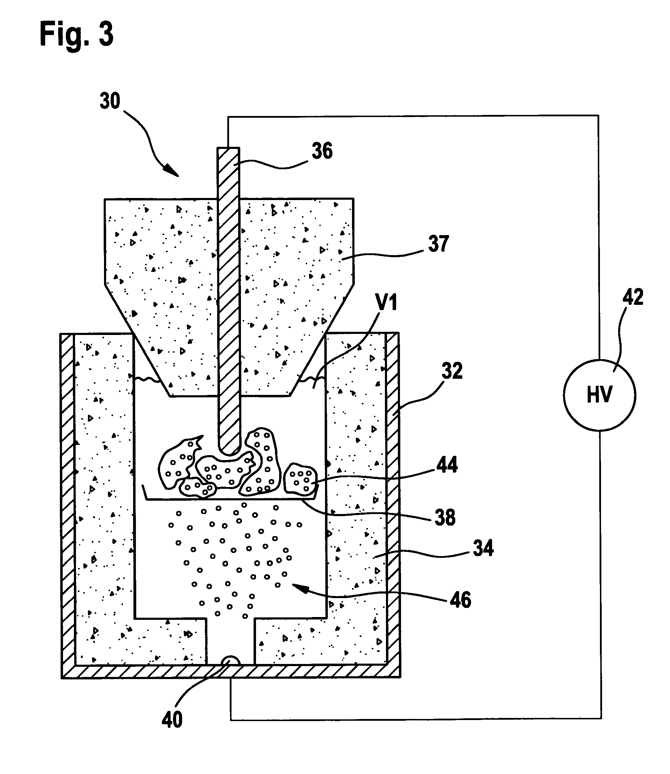

The fuel element pieces are brought into a reactor 30 filled with a volume V1 of water. The reactor vessel shown in Fig. 3 comprises a steel container 32, the inner wall of which is lined with an electric insulator 34 (e.g. plastic).A massive-steel high voltage electrode 36 is arranged in an electrically insulating cover block 37 and plunges into the water. A sieve 38 is located in the middle of the volume V1. A second electrode 40 is arranged at the bottom of the reactor an is electrically insulated from the steel container 32. The holes of the sieve 38 have a diameter of approximately three times the fuel particle diameter, in this case 3 mm. A pulse generator 42 periodically charges the top electrode 36 with voltages of 40 - 400 kV with respect to the bottom electrode 40. The distance between the high voltage electrode 36 and the sieve 38 is chosen such that the top electrode 36 has a suitable distance from the fragments 44 (e.g. of the order of one or several centimetres ) and that discharges through the water are obtained. The discharges cause electro-hydraulic shock waves in the water, which fragment the matrix graphite. The maximum discharge currents are of the order of 10 kA. By correctly choosing the volume V1, damage to the fuel particles 10 can be avoided with these electric discharge parameters. For energy-optimised fragmentation, the diameter of the holes in the sieve 38 is adapted to the size of the fuel particles. If the holes are too large, the fuel particles remain in the matrix material, if they are too small, the matrix material will be fragmented to unnecessarily fine grains before falling through the holes of the sieve 38. The maximum of the statistical fragment size distribution is approximately 1.5 mm. If holes of 3 mm are selected, the fuel particles can thus be separated from the matrix in the material fraction 46, which has fully passed the sieve. The fuel particles, which have dropped through the sieve are contained in the sieve fraction containing the fragments with a minimal size of 1 mm.

The quantity of material to be processed in further steps can be reduced by segregating out a fraction of the matrix material. This can be done by sieving the fragments obtained in the preceding step. The quantity of removed matrix material depends on the size of the holes in the sieve: if the hole diameter is only slightly smaller than the fuel particles, the residual material to treat further mainly comprises fuel particles; if the hole diameter is chosen substantially smaller than the fuel particles the fraction of residual matrix material is larger. If one chooses the hole diameter slightly smaller than the fuel kernel, one assures that possible cracked fuel particles are subject to further treatment.

In a subsequent process step the residual fragments of the preceding step are treated with high voltage discharges in a liquid-containing reactor in order to crack the coatings of the fuel particles. There are two options:
high voltage discharges over a closed cup or
high voltage discharges over a sieve with a hole diameter slightly smaller than the fuel kernels (here 0.4 mm).

The electric parameters can be identical to those mentioned above, the reaction volume V2 is however significantly smaller than the first volume V1. The electrode can plunge into the material fragments to be treated. The volume reduction yields an increased power density of the created shock waves, which make the coatings burst and which may remove them from the fuel kernel. Contrary to the oxide kernel, the coating shells and possibly residual matrix material are further fragmented. Once coatings and matrix material are sufficiently fragmented, they will drop through the sieve, or, when a closed cup is used, the fragmentation products can be sieved in a consecutive step.

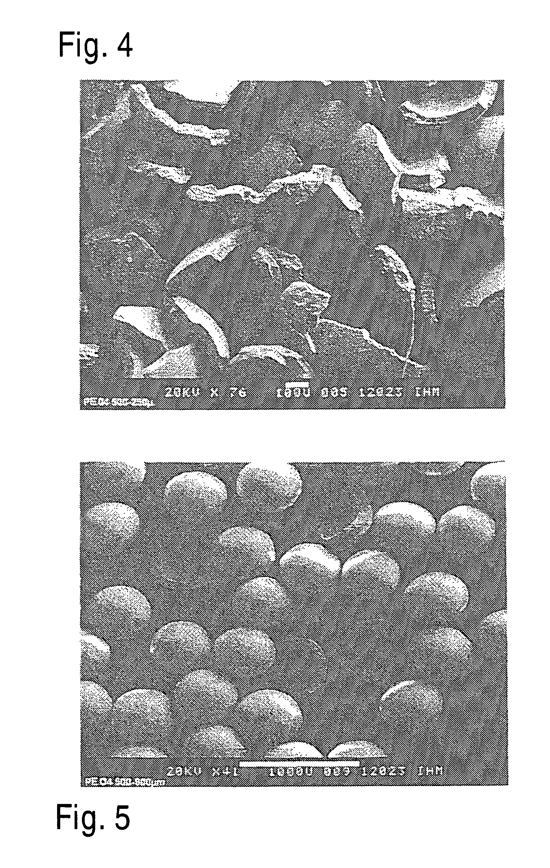

Fig. 4 shows a picture of separated coating shells and Fig. 5 shows fuel kernels together with their fragmented coating shells.

Another option would be to dissolve the fragmentation products collected in a closed cup directly in nitric acid to maximize the recovery of nuclear material including the fraction that may have penetrated into the coating shells.

It will be appreciated that fragmentation by voltage discharges can also be used for coated fuel particles, which are not embedded in matrix material. In this case, the fuel particles are arranged in a reactor containing a fluid or liquid (e.g. water), either on a sieve or in a closed cup.

If a sieve is used, the latter preferentially has holes with a diameter slightly smaller than the diameter of the fuel kernels. Voltage discharges are provoked by application of high voltage pulses between the sieve and an electrode arranged in the reactor. The electrode may plunge into the fuel particles. The shock waves created by the discharges make the coatings burst. Small pieces of coating material can drop through the holes of the sieve, while intact fuel kernels remain on top of the sieve.

When using a closed cup for fragmentation, high voltage pulses are applied between the cup and an electrode, which is arranged in the reactor at a suitable distance. The electrode may also plunge into the fuel particles. When the coatings are sufficiently fragmented, the fragments can be sieved to retrieve the fuel kernels and/or the fuel kernels can be dissolved, e.g. in nitric acid.

### Test examples

Several proof-of-principle tests were performed with dummy particles. The following material was used for the experiments:
a) Coated particles: ca. 90 g with yttrium-stabilized zirconia kernel and triple coating, dummy particles obtained from the French Atomic Energy Commission CEA, Grenoble, France.
b) Several cylindrical pieces of typical commercial reactor graphite type SGL R6650.

The tests were performed in suitably modified high voltage discharge installations known e.g. from Bluhm et al. between November 2003 and April 2004. Successful results are reported in the following.

In the used laboratory equipment, the required electric energy for fragmenting the matrix graphite in the first fragmentation step was approximately 2000 - 5000 kWh/t depending on type and shape of the matrix graphite.

The electric energy required for the fragmentation of the coatings was approximately 8000 kWh/t.

The measured energy consumption for the tests is deemed conservative as the tests were run with laboratory installations and small amounts of material to be fragmented.

### Fragmentation of dummy particles

Used material: 10 g dummy particles ∅1 mm.
Reaction vessel: reduced volume with polyethylene insert ∅120 × 15 mm, bottom reinforced. Closed cup filled with water.
Marx Generator: 7 stage 7 x 140 nF without additional inductivity, electrode distances 11, 12, 12, 12, 12, 12, 12 mm; charge current 120 mA at 60 kV.
Distance between electrodes: 30 mm
Number of pulses: 200
Sieve analysis of reaction product:

| particle diameter | recovered mass [g] |
|---|---|
| > 900 µm | 0 |
| 500 | 5.65 |
| 250 | 1.42 |
| <250 | 1.75 |
| total | 8.82 |
| | (i.e. 1.18 g handling loss) |

The analysis shows that all inserted fuel particles were fragmented and that all fuel kernels have remained intact.

### Fragmentation of Graphite Pieces

Used material: 3 graphite cylinders approx. ∅44 × 35 mm, 282 g total
Reaction vessel: Sieve bottom 3 mm, graphite cylinders symmetrically arranged around electrode.
Marx Generator: 7 stage 7 x 140 nF without additional inductivity, electrode distances 11, 12, 12, 12, 12, 12, 12 mm; charge current 150 mA at 60 kV.
Distance between electrodes: 50 mm
Number of pulses: 2000.

After 2000 pulses, almost all of the created graphite particles had dropped through the sieve.

### Fragmentation of Graphite Pieces together with Coated Particles

This test demonstrated that representative mixtures of graphite and coated particles can be fragmented together.
Used material: graphite fragments < 3 mm, 187 g (wet) with 1 g coated particles
Reaction vessel: Closed cup
Marx Generator: 7 stage 7 x 140 nF without additional inductivity, electrode distances 11, 12, 12, 12, 12, 12, 12 mm; charge current 150 mA at 60 kV.
Distance between electrodes: 20 mm
Number of pulses: 1600 total
Sieve analysis of reaction product:

| particle diameter | recovered mass [g] |
|---|---|
| > 4 mm | 0 |
| 2 - 4 mm | 8.9 |
| 1.12 -2 mm | 29.9 |
| 0.9 - 1.12 mm | 8.8 |
| 0.5 - 0.9 mm | 14.5 |
| 0.25-0.5 mm | 8.1 |
| 0.125 - 0.25 mm | 5.7 |
| < 0.125 mm | 4.7 |

This test under not optimized conditions shows that at least a significant fraction of the coated particles can be fragmented with simultaneous presence of graphite fragments.

## Claims

1. A head-end process for the reprocessing of reactor core material (10, 20, 22) comprising fuel particles (10), the process comprising the steps of:
arranging said reactor core material (10, 20, 22) in a reactor containing a fluid, said reactor (30) having a voltage discharge installation (36, 40, 42) in said fluid;
fragmenting said fuel particles (10) into fragmentation products (44, 46) by applying voltage discharges through said fluid ; and
segregating said fragmentation products (44, 46).

2. A head-end process according to claim 1, wherein said fuel particles (10) comprise each a fuel kernel (12) and coatings (13, 14, 15, 16) enclosing said fuel kernel (12); and wherein said process comprises fragmenting said coatings (13, 14, 15, 16) by said voltage discharges.

3. A head-end process according to claim 2, wherein said reactor core material (10, 20, 22) further comprises matrix material (22), said fuel particles (10) being embedded in said matrix material (22); and wherein said process comprises fragmenting said matrix material (22) by said voltage discharges.

4. A head-end process according to any one of claims 1 to 3, wherein segregating said fragmentation products (44, 46) comprises sieving.

5. A head-end process according to any one of claims 2to 3, wherein segregating said fragmentation products (44, 46) comprises separating said fuel kernels (12) from said coatings (13, 14, 15, 16) and/or said matrix material (22) by dissolving said fuel kernels (12).

6. A head-end process according to any one of claims 1 to 5, wherein said reactor core material (10, 20, 22) comprises matrix material (22) and fuel particles (10), said fuel particles (10) being embedded in said matrix material (22), each fuel particle (10) comprising a fuel kernel (12) and coatings (13, 14, 15, 16) enclosing said fuel kernel; said process comprising the steps of:
arranging said reactor core material (10, 20, 22) in a reactor containing a first volume (V1) of a fluid, said reactor having a voltage discharge installation (36, 40, 42) in said fluid;
applying first voltage discharges through said first volume (V1) of fluid so as to primarily fragment said matrix material (10, 20, 22), thereby obtaining fragmentation products (44, 46);
segregating said fragmentation products (44, 46) so as to obtain residual fragments, which contain said fuel kernels (12) and possibly residual matrix material (22);
arranging said residual fragments in a reactor (30) containing a second volume of fluid;
applying second voltage discharges through said second volume of fluid so as to fragment said coatings (13, 14, 15, 16);
segregating said fuel kernels (12) from said coatings (13, 14, 15, 16) and/or residual matrix material (22).

7. A head-end process according to claim 6, wherein said second volume is substantially smaller than said first volume (V1).

8. A head-end process according to claim 6 or 7, wherein at least one of said segregation steps comprises sieving and/or dissolving said fuel kernels (12).

9. A head-end process according to any one of claims 1 to 8, wherein said reactor core material (10, 20, 22) is arranged on a sieve (38) in said reactor (30), and wherein said voltage discharges are caused by applying potential differences between two electrodes (36, 40) arranged in said reactor (30).

10. A head-end process according to any one of claims 1 to 8, wherein said reactor core material (10, 20, 22) is arranged in a closed cup in said reactor (30), and wherein said voltage discharges are caused by applying potential differences between two electrodes (36, 40) arranged in said reactor (30).

11. A head-end process according to claim 9 or 10, wherein one of said electrodes (36, 40) plunges into said reactor core material (10, 20, 22).

12. A head-end process according to any one of the preceding claims, wherein said reactor core material (10, 20, 22) comprises fuel elements, said fuel particles (10) being embedded in said fuel elements.

13. A head-end process according to any one of the preceding claims, wherein the step of applying voltage discharges comprises applying potential differences chosen in the range from 40 kV to 400 kV.

## Patentansprüche

1. Head-End-Verfahren zur Wiederaufbereitung von Reaktorkernmaterial (10, 20, 22), welches Brennstoffpartikel (10) umfasst, wobei das Verfahren die folgenden Schritte umfasst:
Anordnen des Reaktorkernmaterials (10, 20, 22) in einem Reaktor, der ein Fluid enthält, wobei der Reaktor (30) eine Spannungsentladungsanlage (36, 40, 42) in dem Fluid aufweist;
Fragmentieren der Brennstoffpartikel (10) in Fragmentierungsprodukte (44, 46) durch Anwenden von Spannungsentladungen durch das Fluid hindurch; und
Trennen der Fragmentierungsprodukte (44, 46).

2. Head-End-Verfahren nach Anspruch 1, wobei die Brennstoffpartikel (10) jeweils einen Brennstoffkern (12) und Schalen (13, 14, 15, 16) umfassen, die den Brennstoffkern (12) umschließen; und wobei das Verfahren das Fragmentieren der Schalen (13, 14, 15, 16) durch die Spannungsentladungen umfasst.

3. Head-End-Verfahren nach Anspruch 2, wobei das Reaktorkernmaterial (10, 20, 22) außerdem Matrixmaterial (22) umfasst und die Brennstoffpartikel (10) in das Matrixmaterial (22) eingebettet sind; und wobei das Verfahren das Fragmentieren des Matrixmaterials (22) durch die Spannungsentladungen umfasst.

4. Head-End-Verfahren nach einem der Ansprüche 1 bis 3, wobei das Trennen der Fragmentierungsprodukte (44, 46) das Sieben umfasst.

5. Head-End-Verfahren nach einem der Ansprüche 2 bis 3, wobei das Trennen der Fragmentierungsprodukte (44, 46) das Trennen der Brennstoffkerne (12) von den Schalen (13, 14, 15, 16) und/oder dem Matrixmaterial (22) durch Auflösen der Brennstoffkerne (12) umfasst.

6. Head-End-Verfahren nach einem der Ansprüche 1 bis 5, wobei das Reaktorkernmaterial (10, 20, 22) Matrixmaterial (22) und Brennstoffpartikel (10) umfasst, die Brennstoffpartikel (10) in das Matrixmaterial (22)
eingebettet sind und jedes Brennstoffpartikel (10) einen Brennstoffkern (12) und Schalungen (13, 14, 15, 16) umfasst, die den Brennstoffkern umschließen; wobei das Verfahren die folgenden Schritte umfasst:
Anordnen des Reaktorkernmaterials (10, 20, 22) in einem Reaktor, der ein erstes Volumen (V1) eines Fluids enthält, wobei der Reaktor eine Spannungsentladungsanlage (36, 40, 42) in dem Fluid aufweist;
Anwenden von ersten Spannungsentladungen durch das erste Volumen (V1) des Fluids hindurch, so dass hauptsächlich das Matrixmaterial (10, 20, 22) fragmentiert wird, wodurch Fragmentierungsprodukte (44, 46) erhalten werden;
Trennen der Fragmentierungsprodukte (44, 46), um Restfragmente zu erhalten, die die Brennstoffkerne (12) und möglicherweise restliches Matrixmaterial (22) enthalten;
Anordnen der Restfragmente in einem Reaktor (30), der ein zweites Fluidvolumen enthält;
Anwenden von zweiten Spannungsentladungen durch das zweite Fluidvolumen hindurch, so dass die Schalen (13, 14, 15, 16) fragmentiert werden;
Trennen der Brennstoffkerne (12) von den Schalen (13, 14, 15, 16) und/oder dem restlichen Matrixmaterial (22).

7. Head-End-Verfahren nach Anspruch 6, wobei das zweite Volumen wesentlich kleiner ist als das erste Volumen (V1).

8. Head-End-Verfahren nach Anspruch 6 oder 7, wobei mindestens einer der Trennungsschritte das Sieben und/oder Auflösen der Brennstoffkerne (12) umfasst.

9. Head-End-Verfahren nach einem der Ansprüche 1 bis 8, wobei das Reaktorkernmaterial (10, 20, 22) auf einem Sieb (38) im Reaktor (30) angeordnet ist; und wobei die Spannungsentladungen durch das Anlegen von Potenzialdifferenzen zwischen zwei Elektroden (36, 40) verursacht werden, die im Reaktor (30) angeordnet sind.

10. Head-End-Verfahren nach einem der Ansprüche 1 bis 8, wobei das Reaktorkernmaterial (10, 20, 22) in einem geschlossenen Becher im Reaktor (30) angeordnet ist; und wobei die Spannungsentladungen durch das Anlegen von Potenzialdifferenzen zwischen zwei Elektroden (36, 40) verursacht werden, die im Reaktor (30) angeordnet sind.

11. Head-End-Verfahren nach Anspruch 9 oder 10, wobei eine der Elektroden (36, 40) in das Reaktorkernmaterial (10, 20, 22) eintaucht.

12. Head-End-Verfahren nach einem der vorhergehenden Ansprüche, wobei das Reaktorkernmaterial (10, 20, 22) Brennelemente umfasst und die Brennstoffpartikel (10) in die Brennelemente eingebettet sind.

13. Head-End-Verfahren nach einem der vorhergehenden Ansprüche, wobei der Schritt des Anwendens von Spannungsentladungen das Anlegen von Potenzialdifferenzen umfasst, die im Bereich von 40 kV bis 400 kV ausgewählt werden.

## Revendications

1. Procédé de traitement initial pour le retraitement d'un matériau de coeur de réacteur (10, 20, 22) comprenant des particules de combustible (10), le procédé comprenant les étapes de :
disposition dudit matériau de coeur de réacteur (10, 20, 22) dans un réacteur contenant un fluide, ledit réacteur (30) possédant une installation de décharge de tension (36, 40, 42) dans ledit fluide :
fragmentation desdites particules de combustible (10) en produits de fragmentation (44, 46) par application de décharges de tension à travers ledit fluide ; et
séparation desdits produits de fragmentation (44, 46).

2. Procédé de traitement initial selon la revendication 1, dans lequel lesdites particules de combustible (10) comprennent chacune un noyau de combustible (12) et des revêtements (13, 14, 15, 16) renfermant ledit noyau de combustible (12); et dans lequel ledit procédé comprend la fragmentation desdits revêtements (13, 14, 15, 16) par lesdites décharges de tension.

3. Procédé de traitement initial selon la revendication 2, dans lequel ledit matériau de coeur de réacteur (10, 20, 22) comprend en outre un matériau de matrice (22), lesdites particules de combustible (10) étant encastrées dans ledit matériau de matrice (22) ; et dans lequel ledit procédé comprend la fragmentation dudit matériau de matrice (22) par lesdites décharges de tension.

4. Procédé de traitement initial selon l'une quelconque des revendications 1 à 3, dans lequel la séparation desdits produits de fragmentation (44, 46) comprend le tamisage.

5. Procédé de traitement initial selon l'une quelconque des revendications 2 à 3, dans lequel la séparation desdits produits de fragmentation (44, 46) comprend la séparation desdits noyaux de combustible (12) desdits revêtements (13, 14, 15, 16) et/ou dudit matériau de matrice (22) par dissolution lesdits noyaux combustibles (12).

6. Procédé de traitement initial selon l'une quelconque des revendications 1 à 5, dans lequel ledit matériau de coeur de réacteur (10, 20, 22) comprend un matériau de matrice (22) et des particules de combustible (10), lesdites particules de combustible (10) étant encastrées dans ledit matériau de matrice (22), chaque particule de combustible (10) comprenant un noyau de combustible (12) et des revêtements (13, 14, 15, 16) renfermant ledit noyau de combustible ; ledit procédé comprenant les étapes de :
disposition dudit matériau de coeur de réacteur (10, 20, 22) dans un réacteur contenant un premier volume (V1) d'un fluide ledit réacteur possédant une installation de décharge de tension (36, 40, 42) dans ledit fluide ;
application de premières décharges de tension à travers ledit premier volume (V1) de fluide de manière à fragmenter principalement ledit matériau de matrice (10, 20, 22), obtenant de la sorte des produits de fragmentation (44, 46) ;
séparation desdits produits de fragmentation (44, 46) de manière à obtenir des fragments résiduels, qui contiennent lesdits noyaux de combustible (12) et éventuellement du matériau de matrice résiduel (22);
disposition desdits fragments résiduels dans un réacteur (30) contenant un deuxième volume de fluide ;
application de deuxièmes décharges de tension à travers ledit deuxième volume de fluide de manière à fragmenter lesdits revêtements (13, 14, 15, 16) ;
séparation desdits noyaux de combustible (12) desdits revêtements (13, 14, 15, 16) et/ou du matériau de matrice résiduel (22).

7. Procédé de traitement initial selon la revendication 6, dans lequel ledit deuxième volume est sensiblement inférieur audit premier volume (V1).

8. Procédé de traitement initial selon la revendication 6 ou 7, dans lequel au moins l'une desdites étapes de séparation comprend le tamisage et/ou la dissolution desdits noyaux de combustible (12).

9. Procédé de traitement initial selon l'une quelconque des revendications 1 à 8, dans lequel ledit matériau de coeur de réacteur (10, 20, 22) est disposé sur un tamis (38) dans ledit réacteur (30), et dans lequel lesdites décharges de tension sont générées par application de différences de potentiel entre deux électrodes (36, 40) disposées dans ledit réacteur (30).

10. Procédé de traitement initial selon l'une quelconque des revendications 1 à 8, dans lequel ledit matériau de coeur de réacteur (10, 20, 22) est disposé dans un vase clos dans ledit réacteur (30), et dans lequel lesdites décharges de tension sont générées par application de différences de potentiel entre deux électrodes (36, 40) disposées dans ledit réacteur (30).

11. Procédé de traitement initial selon la revendication 9 ou 10, dans lequel l'une desdites électrodes (36, 40) plonge dans ledit matériau de coeur de réacteur (10, 20, 22).

12. Procédé de traitement initial selon l'une quelconque des revendications précédentes, dans lequel ledit matériau de coeur de réacteur (10, 20, 22) comprend des éléments de combustible, lesdites particules de combustible (10) étant encastrées dans lesdits éléments de combustible.

13. Procédé de traitement initial selon l'une quelconque des revendications précédentes, dans lequel l'étape d'application de décharges de tension comprend l'application de différences de potentiel choisies dans la plage allant de 40 kV à 400 kV.
